# EUROPÄISCHE PATENTSCHRIFT

(11) **EP 1 497 651 B1**
(45) Veröffentlichungstag und Bekanntmachung des Hinweises auf die Patenterteilung: **01.08.2007**
(21) Anmeldenummer: 03720483.1
(22) Anmeldetag: 16.04.2003
(51) Int. Cl.: G01N 33/543, B01L 3/00

(54) **WELLENLEITER IN PORÖSEN SUBSTRATEN**
WAVEGUIDE IN POROUS SUBSTRATES
GUIDE D'ONDES DANS DES SUBSTRATS POREUX

(30) Priorität: 19.04.2002 DE 10217568
(43) Veröffentlichungstag der Anmeldung: 19.01.2005
(73) Patentinhaber: Qimonda AG, 81739 München (DE)
(72) Erfinder: DERTINGER, Stephan, 80335 München (DE); FRITZ, Michaela, 81673 München (DE); FUCHS, Karin, 81739 München (DE); HANEDER, Thomas, 85221 Dachau (DE); HANKE, Hans-Christian, 81479 München (DE); MARTIN, Alfred, 93053 Regensburg (DE); MÄRZ, Reinhard, 81477 München (DE)
(74) Vertreter: Müller-Boré & Partner Patentanwälte
(86) Internationale Anmeldenummer: PCT/EP2003/003997
(87) Internationale Veröffentlichungsnummer: WO 2003/089931

(56) Entgegenhaltungen:
- EP-A- 1 304 563
- WO-A-91/18292
- WO-A-97/31259
- US-A- 5 310 686
- US-A- 5 639 671
- US-A- 5 874 047
- US-B1- 6 355 429

## Beschreibung

Die vorliegende Erfindung betrifft eine Vorrichtung gemäß Anspruch 1, eine Verwendung der Vorrichtung gemäß Anspruch 19, Verfahren zum Nachweis chemischer bzw. biochemischer Reaktionen und/oder Bindungen gemäß den Ansprüchen 20, 22 und 24 sowie ein Verfahren zur Herstellung einer Vorrichtung gemäß Anspruch 18.

Die erfindungsgemäßen Vorrichtungen eignen sich als Basis für "BioChip-Grundmodule" in Verfahren zum Nachweis biochemischer (Bindungs)Reaktionen sowie hierfür insbesondere zur Untersuchung von enzymatischen Reaktionen, Nukleinsäure-Hybridisierungen, Protein-Protein-Wechselwirkungen und anderer Bindungsreaktionen im Bereich der Genom-, Proteom- oder Wirkstoff-Forschung in Biologie und Medizin.

Die U.S. 5,874,047 zeigt einen chemischen Sensor mit einem Trägermaterial, welches eine Vielzahl von Poren aufweist, wobei die Porenwände aus zwei Schichten aufgebaut sind. Dabei besteht eine der Schichten aus einem Metallfilm.

Aus der EP 1 304 563 A1 geht eine Vorrichtung zum Nachweis biochemischer Reaktionen hervor, die ein Substrat mit zwei Schichten unterschiedlichen Brechungsgrades umfasst. In den Schichten sind Poren in Form von Vertiefungen vorgesehen.

In der Molekularbiologie finden heute in zunehmendem Maße Biochips Verwendung, mit denen auf schnelle Art und Weise Erkenntnisse über Organismen und Gewebe gewonnen werden. Für die Biowissenschaften und die medizinische Diagnostik ist die Detektion (bio)chemischer Reaktionen, d.h. die Detektion biologisch relevanter Moleküle in definiertem Untersuchungsmaterial von herausragender Bedeutung. In diesem Rahmen wird die Entwicklung von sogenannten BioChips stetig vorangetrieben. Bei derartigen BioChips handelt es sich üblicherweise um miniaturisierte hybride Funktionselemente mit biologischen und technischen Komponenten, insbesondere auf einer Oberfläche eines BioChip-Grundmoduls immobilisierten Biomolekülen, die als spezifische Interaktionspartner dienen. Häufig weist die Struktur dieser Funktionselemente Reihen und Spalten auf. Man spricht dann von sogenannten "Mikroarrays". Da tausende von biologischen bzw. biochemischen Funktionselementen auf einem Chip angeordnet sein können, werden diese in der Regel mit mikrotechnischen Methoden angefertigt.

Als biologische und biochemische Funktionselemente kommen insbesondere DNA, RNA, PNA, (bei Nukleinsäuren und ihren chemischen Derivaten können z.B. Einzelstränge wie Oligonukleotide, Triplex-Strukturen oder Kombinationen hiervon vorliegen), Saccharide, Peptide, Proteine (z.B. Antikörper, Antigene, Rezeptoren), Derivate der kombinatorischen Chemie (z.B. organische Moleküle), Zellbestandteile (z.B. Organellen), einzelne Zellen, mehrzellige Organismen sowie Zellverbände in Frage.

Die am weitesten verbreitete Variante von Biochips sind die sogenannten Microarrays. Dies sind kleine Plättchen ("Chips") aus beispielsweise Glas, Gold, Kunststoff oder Silizium. Zum Nachweis entsprechender biologischer oder biochemischer (Bindungs)Reaktionen werden beispielsweise kleine Mengen an solubilisierten unterschiedlichen Fängermolekülen, z.B. eine bekannte Nukleinsäuresequenz, in Form von kleinsten Tröpfchen punktförmig und matrizenartig, sogenannte Dots, auf der Oberfläche des BioChip-Grundmoduls fixiert.

In der Praxis werden einige hundert bis einige tausend Tröpfchen pro Chip verwendet. Anschließend wird ein zu untersuchender Analyt, der beispielsweise fluoreszenzmarkierte Zielmoleküle enthalten kann, über diese Oberfläche gepumpt. Dabei kommt es im allgemeinen zu unterschiedlichen chemischen (Bindungs)Reaktionen zwischen den im Analyt enthaltenen Zielmolekülen und den fixierten bzw. immobilisierten Fängermolekülen. Wie bereits angeführt, werden zur Beobachtung dieser Reaktionen oder Bindungen die Zielmoleküle mit Farbstoffmolekülbausteinen, üblicherweise Fluorochromen markiert. Das Vorhandensein und die Intensität von Licht, das von den Fluorochromen emittiert wird, gibt Aufschluß über den Verlauf der Reaktion oder Bindung in den einzelnen Tröpfchen auf dem Substrat, so daß Rückschlüsse auf das Vorhandensein und/oder die Eigenschaft der Zielmoleküle und/oder Fängermoleküle gezogen werden können. Wenn sich die entsprechenden fluoreszenzmarkierten Zielmoleküle des Analyten mit bzw. an den an der Oberfläche des Trägersubstrats immobilisierten Fängermolekülen umsetzen bzw. binden, kann durch optische Anregung mit einem Laser und Messung des entsprechenden Fluoreszenzsignals diese Reaktion bzw. Bindung nachgewiesen werden.

Substrate mit hoher, aber definierter Porosität weisen als Basis für derartige BioChips mehrere Vorteile gegenüber planaren Substraten auf. Auf der stark vergrößerten Oberfläche können mehr Nachweisreaktionen stattfinden. Dadurch steigt die Nachweisempfindlichkeit für biologische Assays. Durch Pumpen der im Analyt gelösten Zielmoleküle durch die Kanäle zwischen Vorder- und Rückseite des porösen Substrates werden diese in nahen räumlichen Kontakt mit der Oberfläche des Substrates gebracht (< 10 µm). Auf dieser Größenskala ist die Diffusion ein sehr effektiver Transportprozeß, der innerhalb kurzer Zeit die Distanzen zwischen nachzuweisendem Zielmolekül und dem auf der Oberfläche immobilisierten Fängermolekül überbrückt. Die Geschwindigkeit der Bindungsreaktion kann dadurch erhöht und damit die Dauer des Nachweisverfahrens deutlich verkürzt werden.

Ein Beispiel für ein Substrat mit derartiger definierter Porösität ist elektrochemisch hergestelltes poröses Silizium (vgl. DE 42 02 454, EP 0 553 465 oder DE 198 20 756).

Ein großer Teil der heute verwendeten analytischen Methoden in der Wirkstoff-Forschung und klinischen Diagnostik setzt optische Verfahren zum Nachweis von Bindungsereignissen zwischen nachzuweisender Substanz und Fängermolekülen ein (z.B. DNA-Hybridisierungen, Antikörper-Antigen-Wechselwirkungen und Protein-Wechselwirkungen). Die nachzuweisende Substanz wird hierbei mit einem Marker versehen, der nach Anregung mit Licht geeigneter Wellenlänge fluoresziert (Fluoreszenzverfahren) oder der eine chemische Reaktion auslöst, die wiederum Licht erzeugt (Chemilumineszenzverfahren). Bindet die nachzuweisende Substanz, d.h. das Zielmolekül, mit dem immobilisierten Fängermolekül auf der Oberfläche, so kann dies optisch, z.B. über Lumineszenz, nachgewiesen werden. Unter dem Begriff "Lumineszenz" wird hierbei die spontane Emission von Photonenim ultravioletten bis infraroten Spektralbereich bezeichnet. Anregungsmechanismen der Lumineszenz können optischer oder nicht-optischer Natur sein, beispielsweise elektrische, chemische, biochemische und/oder thermische Anregungsprozesse. Somit sollen insbesondere Chemi-, Bio- und Elektrolumineszenz sowie Fluoreszenz und Phosphoreszenz unter den Begriff "Lumineszenz" im Sinne dieser Erfindung fallen.

Poröse Substrate mit hoher optischer Dichte und geringer Reflektivität, wie beispielsweise poröses Silizium, dessen Reflektivität im sichtbaren Bereich des Spektrums 50 bis 70 % beträgt, liefern in Verbindung mit Fluoreszenz- oder Chemilumineszenzverfahren jedoch nicht die erwarteten Ergebnisse, insofern die experimentell beobachtete Lichtsignalausbeute bei weitem nicht an die theoretisch erreichbaren Werte heranreicht. Der Grund für die gegenüber den theoretischen Werten verringerte, experimentell beobachtete Lichtsignalausbeute beim Einsatz derartiger poröser Substrate liegt zum einen in Problemen bei der Emission der Fluoreszenz der zu untersuchenden Substanz bzw. Bindung und zum anderen - wenn ein Fluoreszenzverfahren vorliegt - in Problemen bei der optischen Anregung der Fluoreszenz begründet.

wird im gesamten Volumen der Poren (Luminenszenz-)Licht erzeugt, spielt die Reflektivität der Porenwände eine entscheidende Rolle für die effektive Herausleitung des optischen Signals zur Oberfläche. Im Falle der Chemilumineszenz wird das Lichtsignal isotrop in alle Raumrichtungen abgestrahlt. Infolgedessen strahlt nur ein sehr geringer Anteil des erzeugten Lichts direkt im Öffnungswinkel der einzelnen Pore ab. Alle anderen Strahlengänge werden an den Wänden der Poren mehrfach reflektiert, bis sie die Öffnung der jeweiligen Pore erreichen. Schon bei Reflektivitäten, die nur wenig unterhalb von 100 % liegen, ist jedoch die Intensität eines Signals nach mehreren Reflexionen stark vermindert. Dieser Effekt hat zur Folge, daß dieser Anteil des erzeugten Signals auf dem Weg aus der Pore stark abgeschwächt wird und kaum noch zum Gesamtsignal beitragen kann.

Ferner stellt auch die Abschwächung durch Vielfachreflektionen an den Porenwänden, welche bereits im Zusammenhang mit den Problemen bei der Anregung der Fluoreszenz beschrieben worden ist, bei der Emission der Lumineszenz ein ernstzunehmendes Problem dar. Nur Fluorophore (fluoreszierende Substanzen im Analyten), welche direkt in Richtung der Porenöffnung abstrahlen, stehen unabgeschwächt für ein Fluoreszenzsignal zur Verfügung. Alle übrigen Strahlengänge werden an den Wänden der Poren mindestens einmal reflektiert bis sie die Öffnung der Pore erreichen. Schon bei Reflektivitäten, welche nur wenig unterhalb von 100% liegen, führen diese Vielfachreflektionen zu einer empfindlichen Abschwächung des zu detektierenden optischen Signals.

Um die oben genannten Probleme der Intensitätsabschwächung durch Vielfachreflektionen zu lösen, wurde vorgeschlagen, Reflexschichten zu einer Verringerung der Reflektionsverluste an den Porenwänden anzuordnen, um dadurch das Anregungs- und Emissionslicht besser aus der Poren herausleiten zu können. Jedoch konnte dieser Lösungsansatz keine signifikante Verbesserung der Signalausbeute bewirken.

Der vorliegenden Erfindung liegt somit die Aufgabe zugrunde, eine Vorrichtung bzw. ein "BioChip-Grundmodul" zum Nachweis biochemischer Reaktionen und/oder Bindungen bereitzustellen, die bzw. das im Rahmen von Analyseverfahren auf Fluoreszenz- oder Chemilumineszenzbasis eine höhere absolute Signalausbeute bei gleichzeitig niedrigem Hintergrundsignal liefern soll, um so die Nachweisempfindlichkeit von mit dem fertigen Biochip durchzuführenden Tests zu steigern. Ferner ist es eine Aufgabe der Erfindung, ein Verfahren zum Nachweis biochemischer Reaktion und/oder Bindungen anzugeben, welches eine höhere absolute Signalausbeute bei verbessertem Signal-Rausch-Verhältnis gestattet. Schließlich ist es eine Aufgabe der Erfindung, ein Herstellungsverfahren für eine bevorzugte erfindungsgemäße Vorrichtung anzugeben.

Die Aufgaben werden entsprechend durch eine Vorrichtung gemäß Anspruch 1, Nachweisverfahren nach den Ansprüchen 20 und 22 sowie durch ein Herstellungsverfahren gemäß Anspruch 23 und durch ein Verfahren nach Anspruch 24, gelöst. Bevorzugte Ausführungsformen sind Gegenstand der abhängigen Ansprüche.

Gemäß der Erfindung umfaßt eine Vorrichtung ein flächig ausgebildetes Trägermaterial, welches über zumindest einen Oberflächenbereich verteilt eine Vielzahl von Poren aufweist, welche sich von einer Oberfläche des Trägermaterials zu der gegenüberliegenden Oberfläche durchgängig erstrecken, wobei
- die Poren jeweils durch eine Porenbegrenzungsfläche der in dem Trägermaterial ausgebildeten Porenwände entlang der jeweiligen Porenlängsachsen begrenzt sind,
- zumindest ein Teil der Porenwände zumindest bereichsweise einen Schichtaufbau mit einer die Porenbegrenzungsfläche bildenden ersten Schicht und einer an die erste Schicht angrenzenden von der Porenbegrenzungsfläche beabstandeten zweiten Schicht aufweist und
- der Brechungsindex n_{Wellenleiter} der ersten Schicht größer als der Brechungsindex n₂ der zweiten Schicht ist.

Das Trägermaterial ist somit von einer Vielzahl von Poren durchsetzt, welche sich in dem Trägermaterial erstrecken und den Durchtritt von beispielsweise einem flüssigen Analyten von einer der Oberflächen des Trägermaterials zu der gegenüberliegenden Oberfläche gestatten. Die Poren sind entlang ihrer Porenlängsachsen von Porenbegrenzungsflächen begrenzt, welche in den Porenwänden im Trägermaterial ausgebildet sind. Die Porenbegrenzungsflächen stellen somit die Außenflächen der Porenwände dar, d.h. die Grenzflächen zwischen dem Trägermaterial und den Poren. Die Porenwände sind derjenige Volumenanteil des Trägermaterials, welcher sich zwischen den Poren erstreckt, so daß die Poren durch die Porenwände voneinander getrennt werden.

Erfindungsgemäß wird vorgeschlagen, zumindest einen Teil der Porenwände zumindest bereichsweise als Schichtaufbau auszubilden. Eine erste Schicht, welche die Porenbegrenzungsfläche (Grenzfläche Pore-Trägermaterial) bildet, grenzt hierbei an eine zweite von der Porenbegrenzungsfläche beabstandete Schicht an. Die zweite Schicht ist weiter von der Mittelachse der Pore als die erste Schicht entfernt. Weisen die Poren beispielsweise einen im wesentlichen rechteckigen Querschnitt in einer Schnittebene auf, welche parallel zu der Flächenebene des Trägermaterials verläuft, hat die erste Schicht im Querschnitt gesehen vorzugsweise im wesentlichen eine rahmenförmige Gestalt. Die zweite Schicht kann beispielsweise konzentrisch zu der ersten Schicht ausgebildet sein. Haben die Poren eine rechteckig- oder kreisförmig zylindrische Gestalt, so ist die erste Schicht vorzugsweise als Hohlzylinder gestaltet, dessen Innendurchmesser dem Porendurchmesser entspricht.

Vorzugsweise liegt die Schichtdicke der ersten Schicht in einem Bereich von 50nm bis 1000nm, vorzugsweise 50nm bis 500nm. Die zweite Schicht kann beispielsweise Teil des Trägermaterials selbst sein oder zwischen einem Kern des Trägermaterials und der ersten Schicht angeordnet sein. Im letztgenannten Fall beträgt die Schichtdicke der zweiten Schicht vorzugsweise zumindest 1µm. Vorzugsweise weisen sämtliche Poren des Trägermaterials einen derartigen Schichtaufbau der Porenwände im Bereich der Porenbegrenzungsflächen auf. Vorzugsweise erstreckt sich der Schichtaufbau über die gesamte Länge der Poren.

Durch den beschriebenen Schichtaufbau mit einer ersten Schicht, welche einen Brechungsindex n_{Wellenleiter} aufweist, der größer als der Brechungsindex n₂ der zweiten Schicht ist, läßt sich ein Wellenleiter in den Porenwänden nahe den Porenbegrenzungsflächen definieren. Wird nämlich ein Analyt (flüssig oder gasförmig) in die Poren eingeführt, dessen Brechungsindex n_{Pore} ebenfalls kleiner als der Brechungsindex n_{Wellenleiter} der ersten Schicht ist, so kann in der ersten Schicht ein optisches Signal in Form einer Wellenleitermode geführt werden. Beispielsweise kann ausgehend von einer der Oberflächen des Trägermaterials Anregungslicht in die erste, den Wellenleiterkern bildende Schicht mit Brechungsindex n_{Wellenleiter} eingekoppelt werden, welches dann aufgrund der Begrenzung durch Schichten mit kleinerem Brechungsindex (n₂, n_{Pore} < n_{Wellenleiter}) in Form einer Wellenleitermode in der ersten Schicht geführt wird.

Zwischen der ersten Schicht und der zweiten Schicht kann gegebenenfalls bereichsweise eine für den interessierenden wellenlängenbereich transparente Haftvermittlerschicht, die vorzugsweise eine Dicke von ≤ 20 nm aufweist, angeordnet sein, welche insbesondere die mechanische Verbindung zwischen der ersten Schicht und der zweiten Schicht verbessert.

Die optischen Eigenschaften des Schichtmaterials der ersten Schicht werden vorzugsweise an die Wellenlänge des einzukoppelnden Anregungslichts angepaßt. Vorzugsweise ist die erste Schicht in einem vorbestimmten bzw. dem interessierenden Spektralbereich transparent. Der Spektralbereich kann insbesondere der sichtbare, ultraviolette oder infrarote Spektralbereich sein. Die so in der ersten Schicht geführte Wellenleitermode weist ein von den Brechungsindexunterschieden und der Wellenleitergeometrie abhängiges Evaneszenzfeld auf, welches sich insbesondere in einen Bereich, welcher nahe zu den Porenbegrenzungsflächen angeordnet ist, in die Poren hinein erstreckt. Dieses Evaneszenzfeld klingt exponentiell mit dem Abstand zur Porenbegrenzungsfläche ab und kann dazu genutzt werden, fluoreszierende Substanzen, welche an der Porenbegrenzungsfläche bzw. in deren unmittelbarer Umgebung angeordnet sind, optisch anzuregen (Eindringtiefe des Evaneszenzfeldes bis etwa 1 µm).

Dadurch, daß das Anregungslicht beispielsweise für die Anregung von Fluorochromen nicht verlustreich über Vielfachreflexionen an den Porenwänden in die Pore eingeleitet wird, sondern verlustarm über eine effiziente Wellenleitermodenführung, können die eingangs beschriebenen Probleme bei der Anregung der Fluoreszenz wirksam vermieden werden. Gleichermaßen ist das Wellenleiterkonzept auch bei der Emission von Lumineszenz (sowohl beim Fluoreszenz- als auch beim Chemilumineszenzverfahren) von Nutzen. Emittiert beispielsweise die nachzuweisende Substanz mit dem immobilisierten Fängermolekül auf der Porenbegrenzungsfläche, d.h. im Evaneszenzfeldbereich der Wellenleitermode ein Photon, so kann dieses verlustarm aus der Vorrichtung ausgekoppelt und einem Detektor zugeführt werden. Die eingangs beschriebene Abschwächung durch Vielfachreflektionen an unvollkommen reflektierenden Porenwänden tritt nicht auf. Somit läßt sich eine deutliche Erhöhung der absoluten Signalausbeute sowie eine nachhaltige Verbesserung des Signal-Rauschverhältnisses erzielen.

Gemäß einer bevorzugten Ausführungsform weist der Schichtaufbau eine an die zweite Schicht angrenzende und von der ersten Schicht beabstandete dritte Schicht auf.

Bevorzugt umfaßt die erste Schicht Ta₂O₅, HfO₂, Y₂O₃, Al₂O₃, Nb₂O₅ Si₃N₄, TiO₂, TaO₂ und/oder Nitrid oder Oxynitrid von Al, Si oder Hf, und die zweite Schicht Glas, Kunststoff, insbesondere organische oder anorganische Polymere, transparente Dielektrika und/oder SiO₂. Die Materialien der ersten und zweiten Schicht werden dabei derart ausgewählt, daß der Brechungsindex n_{wellenleiter} der ersten Schicht stets größer als der Brechungsindex n₂ der zweiten Schicht ist. Ferner wird der Analyt, welcher betriebsmäßig in die Poren eingeleitet wird, hinsichtlich seines Brechungsindexes n_{Pore} derart ausgewählt, daß n_{Wellenleiter} > n_{Pore} gilt.

Vorzugsweise umfaßt die dritte Schicht Metalle, Halbleiter und/oder Kunststoff, insbesondere organische oder anorganische Polymere. Die dritte Schicht kann insbesondere reflektierend und/oder nicht transparent ausgestaltet sein, um beispielsweise eine Vielzahl von Poren durch Ausbildung von Bereichen bzw. Kompartments in Gruppen aufzuteilen, zwischen welchen "optisches Übersprechen" aufgrund der reflektierenden Wände vermieden wird. Vorzugsweise umfaßt die dritte Schicht Silizium, welches n- oder p-dotiert sein kann.

Gemäß einer bevorzugten Ausführungsform vergrößert sich der Porendurchmesser in einem oberflächennahen Bereich des Trägermaterials in Richtung zu der Oberfläche des Trägermaterials. Vorzugsweise sind die Poren in ihrem oberflächennahen Bereich trichterförmig bzw. konisch ausgebildet, wobei es vorteilhaft ist, wenn sich der Porendurchmesser kontinuierlich in Richtung zur Oberfläche des Trägermaterials hin vergrößert. Die erste Schicht wird vorzugsweise in dem konischen Bereich der Poren bis zur Oberfläche des Trägermaterials geführt. Diese Anordnung gestattet eine besonders effiziente Einkopplung von Anregungslicht in die den Wellenleiterkern darstellende erste Schicht. Gleichermaßen verbessert eine derartige Anordnung der Poren bzw. Porenwände im Bereich der Oberfläche des Trägermaterials auch die Auskopplung von zu detektierendem Lumineszenzlicht, welches in der ersten Schicht zur Oberfläche des Trägermaterials geführt wurde.

Vorzugsweise sind die Poren im wesentlichen zylinderförmig, insbesondere rechteckig, kreis-, schlitz- oder ellipsenförmig.

Gemäß einer weiteren Ausführungsform weist die erste Schicht Streuzentren und/oder Fehlstellen auf. Ein derartiger gezielter Einbau von Streuzentren/Fehlstellen an der Grenzfläche der ersten Schicht und/oder in der ersten Schicht selbst, was beispielsweise durch Aufrauhen oder Dotieren erfolgen kann, kann das Ein- und Auskoppeln von Anregungslicht bzw. emittiertem Licht verbessern.

Vorzugsweise weisen die Poren einen Porendurchmesser im Bereich von 500 nm bis 100 *µ*m auf. Vorzugsweise weist das Trägermaterial eine Dicke zwischen 100 bis 5000 *µ*m auf. Vorzugsweise liegt die Porendichte im Bereich von 10⁴ bis 10⁸/cm².

Gemäß einer bevorzugten Ausführungsform weist das Trägermaterial eine Überstruktur aus einem in dem vorbestimmten Spektralbereich reflektierenden und/oder nicht transparenten Material auf. Die Überstruktur kann beliebig ausgebildet sein. Vorzugsweise ist die Überstruktur ein im wesentlichen zylinderförmiger Rahmen, welcher sich von der einen Oberfläche zu der gegenüberliegenden Oberfläche des Trägermaterials erstreckt und welcher zumindest eine der Poren enthält. Der Rahmen unterteilt das Trägermaterial in Bereiche bzw. Kompartments. Vorzugsweise ist der Rahmen aus einem reflektierenden oder nicht transparenten Material hergestellt, so daß ein "optisches Übersprechen" zwischen den einzelnen Bereichen vermieden wird. Der Rahmen kann auch als Teilrahmen ausgebildet sein, bei welchem eine oder mehrere Seiten geöffnet sind. Vorzugsweise ist die Zylinderachse des zylinderförmigen Rahmens parallel zu den Porenlängsachsen der Poren angeordnet. Vorzugsweise stehen die Zylinderachse des Rahmens sowie die Porenlängsachsen senkrecht auf den sich gegenüberliegenden Oberflächen des Trägermaterials. Bevorzugt weist des Rahmen einen Kern aus Silizium auf.

Gemäß einer bevorzugten Ausführungsform sind an der Porenbegrenzungsfläche zumindest einer der Poren zumindest bereichsweise kovalent Fängermoleküle bzw. Sonden, ausgewählt aus der Gruppe, bestehend aus DNA, Proteinen und Liganden, gebunden. Vorzugsweise sind die Fängermoleküle Oligonukleotidsonden, die über endständige Amino- oder Thiolgruppen an Linkermoleküle gebunden sind, die wiederum über kovalente und/oder ionische Gruppen an die Porenbegrenzungsfläche gebunden sind. Die Linkermoleküle sind üblicherweise auf der Basis einer bifunktionellen Siliciumorganischen Verbindung. Derartige bifunktionelle Siliciumorganische Verbindungen können beispielsweise Alkoxysilan-Verbindungen mit einer oder mehreren terminalen funktionalen Gruppen, ausgewählt aus Epoxy, Glycidyl, Chlor, Mercapto oder Amino, sein. Vorzugsweise ist die Alkoxysilan-Verbindung ein Glycidoxyalkylalkoxysilan, wie z.B. 3-Glycidoxypropyltrimethoxysilan, ein Mercaptoalkylalkoxysilan, wie z.B. γ-Mercaptopropyltrimethoxysilan, oder ein Aminoalkylalkoxysilan, wie z.B. N-β-(aminoethyl) γ-aminopropyltrimethoxysilan. Die Länge der als Spacer zwischen der funktionellen Gruppe, wie z.B. Epoxy bzw. Glycidoxy, welche mit dem eigentlichen Fängermolekül bzw. der Sonde bindet, und der Trialkoxysilangruppe wirkenden Alkylenreste unterliegt dabei keiner Beschränkung. Derartige Spacer können auch Polyethylenglykolreste sein. Die als Fängermoleküle beispielsweise verwendbaren Oligonukleotide können unter Verwendung der Synthesestrategie, wie in Tet. Let. 22, 1981, Seiten 1859 bis 1862, beschrieben, hergestellt werden. Die Oligonukleotide können dabei während des Herstellungsverfahrens entweder an der 5-oder der 3-Endstellung mit terminalen Aminogruppen derivatisiert werden. Eine weitere Möglichkeit der Anbindung solcher Fängermoleküle kann durchgeführt werden, indem zunächst die Porenbegrenzungsflächen bzw. die erste Schicht mit einer Chlorquelle, wie Cl₂, SOCl₂, COCl₂ oder (COCl)₂, gegebenenfalls unter Verwendung eines Radikalinitiators wie Peroxide, Azoverbindungen oder Bu₃SnH, behandelt wird und anschließend eine Umsetzung mit einer entsprechenden nucleophilen Verbindung, wie insbesondere mit Oligonukleotiden bzw. DNA-Molekülen, die terminale primäre Aminogruppen oder Thiolgruppen aufweisen, erfolgt (siehe WO 00/33976). Wird eine Si₃N₄-Schicht als erste Schicht im Rahmen der erfindungsgemäßen Vorrichtungen eingesetzt, so kann diese beispielsweise an deren Oberflächenschicht in eine Oxynitrid-Schicht überführt werden, um entsprechende Fängermoleküle über Linkermoleküle kovalent anzubinden.

Durch das Anbinden von Fängermolekülen, ausgewählt aus DNA; Proteinen und Liganden, vorzugsweise endständige Amino- oder Thiolgruppen aufweisende Oligonukleotide, über derartige Linkermoleküle wird ein einsatzfähiger, fertiger BioChip erhalten. Eine derartige erfindungsgemäße Vorrichtung kann die Funktion eines 96-Probenträgers mit der Dichte eines Mikroarrays aufweisen. Weiterhin können auf Basis derartiger: erfindungsgemäßer Vorrichtungen im Stand der Technik verfügbare Mikrochip-Technologien parallelisiert werden.

Erfindungsgemäß wird die Verwendung einer der zuvor beschriebenen erfindungsgemäßen Vorrichtungen als Basis für einen Probenträger in Verfahren zum Nachweis biochemischer Reaktionen und/oder Bindungen sowie hierfür insbesondere zur Untersuchung von enzymatischen Reaktionen, Nukleinsäure-Hybridisierungen, Protein-Protein-Wechselwirkungen und Protein-Liganden-Wechselwirkungen verwendet.

Gemäß einem anderen Aspekt der Erfindung wird ein Verfahren zum Nachweis chemischer bzw. biochemischer Reaktionen und/oder Bindungen vorgeschlagen, mit den Schritten:
- Bereitstellen einer erfindungsgemäßen Vorrichtung bzw. BioChips;
- Einleiten einer zu untersuchenden Substanz in zumindest eine der Poren des Trägermaterials, wobei der Brechungsindex n_{Pore} der zu untersuchenden Substanz kleiner als der Brechungsindex n_{Wellenleiter} der ersten Schicht ist;
- Auskoppeln von Lumineszenzlicht der zu untersuchenden Substanz; und
- Untersuchen des Lumineszenzlichts des zu untersuchenden Material.

Das zu untersuchende Material kann hierbei gas- oder flüssigförmig sein. Da der Brechungsindex n_{Wellenleiter} der ersten Schicht größer als die Brechungsindizes n₂ der zweiten Schicht und n_{Pore} der mit dem Analyten gefüllten Pore ist, kann Anregungslicht bzw. zu detektierendes Emissionslicht aus dem Evaneszenzfeldbereich als Wellenleitermoden in der ersten Schicht geführt werden. Dies gestattet eine effiziente Ein- bzw. Auskopplung des optischen Signals, da keine verlustreiche Dämpfung durch Vielfachreflektionen an den unvollkommen reflektierenden Porenwänden auftritt. Auf diese Weise kann eine nachhaltige Verbesserung der absoluten Signalausbeute sowie eine Verbesserung des erzielbaren Signal-Rauschverhältnisses erreicht werden.

Vorzugsweise umfaßt das Verfahren zusätzlich den Schritt eines Einkoppelns von Anregungslicht als Wellenleitermoden in die erste Schicht des Schichtaufbaus zum Anregen des zu untersuchenden Materials an der Porenbegrenzungsfläche in einem Evaneszenzfeld der Wellenleitermoden. Wie oben bereits eingehend dargelegt wurde, können beispielsweise Fluorophore an der Porenbegrenzungsfläche über das evaneszente Feld der im Wellenleiter (wave guide) geführten Moden angeregt werden, ohne daß eine Volumenanregung erfolgt. Mit diesem Ansatz kann die Fluorophorenanregung auf der Porenbegrenzungsfläche des Wellenleiters um ein Vielfaches gegenüber den Volumenanregungen, wie sie herkömmlich verwendet werden, verbessert werden.

Gemäß einem weiteren Aspekt der Erfindung umfaßt ein Verfahren zum Nachweis chemischer bzw. biochemischer Reaktionen und/oder Bindungen die Schritte:
- Bereitstellen einer erfindungsgemäßen Vorrichtung bzw. BioChips;
- Einleiten einer zu untersuchenden Substanz in zumindest eine der Poren des Trägermaterials, wobei der Brechungsindex n_{Pore} der zu untersuchenden Substanz kleiner als der Brechungsindex n_{Wellenleiter} der ersten Schicht ist;
- Einkoppeln von Anregungslicht als Wellenleitermoden in die erste Schicht des Schichtaufbaus zum Anregen des zu untersuchenden Materials an der Porenbegrenzungsfläche in einem Evaneszenzfeld der Wellenleitermoden; und
- Untersuchen des aus der ersten Schicht nach Wechselwirkung mit dem zu untersuchenden Material ausgekoppelten Anregungslichts.

Somit erfolgt der Nachweis der chemischen bzw. biochemischen Reaktionen und/oder Bindungen nicht über eine Untersuchung einer eventuell emittierten Lumineszenz des zu untersuchenden Materials (zu untersuchender Analyt). Statt dessen werden die Reaktionen und/oder Bindungsereignisse des zu untersuchenden Materials über deren Einfluß auf die im Wellenleiter geführten Moden nachgewiesen. Somit kann das zu untersuchende Material bzw. chemische Vorgänge "labelfrei" detektiert werden.

Dies kann gemäß einer bevorzugten Variante dadurch erfolgen, daß sich durch Anlagerung bzw. Bindung von Molekülen aus dem Analyten an die Fängermoleküle auf der Porenbegrenzungsfläche der ersten Schicht der Brechungsindex in unmittelbarer Nähe zur Porenbegrenzungsfläche ändert. Diese Änderung des Brechungsindexes verstimmt die Parameter der im Wellenleiter geführten Moden, wobei eine Kopplung über das evaneszente Feld der Wellenleitermoden erfolgt. Diese Verstimmung kann beispielsweise über eine Vergleichsmessung der Wellenleitermoden vor und nach Anlagerung bzw. Bindung der Moleküle nachgewiesen werden.

Der Nachweis kann beispielsweise wie folgt durchgeführt werden:
(a) Bei gleichbleibender Geometrie der Lichteinkopplung kann eine Minderung oder Erhöhung der Dämpfung der angeregten Moden im Wellenleiter beobachtet werden. Die Dämpfung der Moden kann über die Änderung der Lichtintensität beispielsweise am Ausgang der Wellenleiter gemessen werden.
(b) Die Geometrie der Lichteinkopplung wird kontinuierlich verändert und die Dämpfung der Wellenleitermoden aufgezeichnet. Aus diesem Verlauf kann die Brechungsindexänderung (vorzugsweise wieder über eine Vergleichsmessung vor und nach der Anlagerung der Moleküle) an der Wellenleiteroberfläche bzw. Porenbegrenzungsfläche mit daran immobilisierten Fängermolekülen(und damit das Bindungsereignis) nachgewiesen werden.

Gemäß einer weiteren bevorzugten Variante kann durch Anlagerung von in einem spezifischen Wellenlängenbereich absorbierenden Molekülen über die immobilisierten Fängermoleküle an die Oberfläche des Wellenleiters den im Wellenleiter geführten Moden über das evaneszente Feld Energie entzogen werden(durch die Adsorption der angelagerten Moleküle). Die Moleküle werden an der mit den Fängermolekülen versehenen Porenbegrenzungsfläche adsorbiert.

Beispielsweise gelingt der Nachweis, bei gleichbleibender Geometrie der Lichteinkopplung über die Minderung oder Erhöhung der Dämpfung der angeregten Moden im Wellenleiter.

Die Dämpfung der Moden kann über die Änderung der Lichtintensität im Wellenleiter beispielsweise am Ausgang gemessen werden.

Gemäß einem weiteren Aspekt der Erfindung umfaßt ein Verfahren zum Steuern chemischer bzw. biochemischer Reaktionen bzw. Synthesen die Schritte:
- Bereitstellen einer erfindungsgemäßen Vorrichtung bzw. BioChips;
- Einleiten einer Synthesesubstanz in zumindest eine der Poren des Trägermaterials, wobei der Brechungsindex n_{Pore} der Synthesesubstanz kleiner als der Brechungsindex n_{Wellenleiter} der ersten Schicht ist;
- Einkoppeln von Licht als Wellenleitermoden in die erste Schicht des Schichtaufbaus zum optischen Anregen zumindest der Synthesesubstanz an der Porenbegrenzungsfläche in einem Evaneszenzfeld der Wellenleitermoden.

Die erfindungsgemäßen Vorrichtungen eignen sich besonders für die örtlich begrenzte, lichtgesteuerte Synthese von Molekülen an den Porenbegrenzungsflächen der Porenwände. Für planare Substrate ist das Verfahren der lichtgesteuerten Synthese beispielsweise in EP 0 619 321 und EP 0 476 014 beschrieben. Auf den Offenbarungsgehalt dieser Druckschriften wird hinsichtlich des Aufbaus und des lichtgesteuerten Syntheseverfahren in vollem Umfang bezug genommen, so daß diese Druckschriften insoweit zum Offenbarungsgehalt der vorliegenden Anmeldung gehören. Durch die effiziente Ausbreitung des Lichts in die Poren hinein (über die Wellenleiter) können an den Porenbegrenzungsflächen der Porenwände über das evaneszente Feld photochemische Reaktionen getrieben bzw. gesteuert werden. Insbesondere können auf diese Weise komplexe sequentielle lichtgesteuerte chemische Reaktionen an den Porenbegrenzungsflächen ausgeführt werden.

Optisches Übersprechen zwischen den einzelnen Poren oder Bereichen/Kompartments wird durch reflektierende/adsorbierende Wände unterbunden. Damit wird ein Hauptproblem bei der lichtgesteuerten Synthese auf planaren Substraten gelöst.

Gemäß einem weiteren Aspekt der Erfindung wird ein Verfahren zur Herstellung einer erfindungsgemäßen Vorrichtung vorgeschlagen, welche folgende Schritte enthält:
(a) Bereitstellen eines flächigen Trägermaterials aus Silizium mit zwei sich gegenüberliegenden Oberflächen;
(b) Erzeugen von Sacklöchern, deren Tiefe geringer als die Dicke des Trägermaterials ist, durch elektrochemisches Ätzen von einer der Oberflächen des Trägermaterials;
(c) Abtragen des Trägermaterials von der gegenüberliegenden Oberfläche mindestens bis zum Boden der Sacklöcher zum Erhalten von Poren, welche sich von der einen Oberfläche zu der gegenüberliegenden Oberfläche des Trägermaterials durchgängig erstrecken;
(d) Unterwerfen des in Schritt (c) erhaltenen Trägermaterials einer Oxidation, so daß die Porenwände des Trägermaterials zumindest im porennahen Bereich aus SiO₂ zur Bildung einer zweiten Schicht bestehen; und
(e) Beschichten zumindest der Porenwände zur Ausbildung der ersten Schicht.

Mit diesem bevorzugten Herstellungsverfahren läßt sich eine besonders bevorzugte Ausführungsform einer erfindungsgemäßen Vorrichtung herstellen. Ausgangspunkt ist hierbei vorzugsweise ein einkristallines Siliziumsubstrat, welches beispielsweise n-dotiert sein kann.

Vorzugsweise erfolgt vor dem Ätzen des Trägermaterials ein mindestens bereichsweises Anordnen einer Maskenschicht auf der einen Oberfläche des Trägermaterials und auf den Innenflächen der in Schritt (b) erzeugten Sacklöcher, wobei nach dem Ätzschritt die Maskenschicht entfernt wird.

Vorzugsweise werden die Sacklöcher dergestalt erzeugt, daß der Abstand der in einer ansonsten, im wesentlichen regelmäßigen Anordnung vorgesehenen Sacklöcher unter Ausbildung von Bereichsübergängen mit erhöhter Siliziumwanddicke bereichsweise geändert wird, wobei die Dicke der Siliziumwände zwischen den Bereichsübergängen um den Betrag des erhöhten Sacklöcherabstandes größer als die Dicke der Siliziumwände innerhalb der Bereiche ist.

Vorzugsweise wird das in Schritt (c) geätzte Trägermaterial einer thermischen Oxidation derart unterworfen, daß in Abhängigkeit von der Siliziumwanddicke die Bereiche mit dünneren Siliziumwänden vollständig oxidiert werden, während bei den Bereichsübergängen mit erhöhter Wanddicke die Siliziumwände nicht vollständig oxidiert werden, so daß ein Siliziumkern in den wänden bestehen bleibt.

In Schritt (b) des erfindungsgemäßen Verfahrens erfolgt ein elektrochemischen Ätzen in das Silizium. Ein derartiges Verfahren ist beispielsweise aus EP 0 296 348, EP 0 645 621, WO 99/25026, DE 42 02 454, EP 0 553 465 oder DE 198 20 756 bekannt, auf die in vollem Umfang Bezug genommen wird und deren Offenbarungsgehalt insoweit Teil der vorliegenden Anmeldung sein soll. Im Rahmen eines derartigen elektrochemischen Ätzens können Sacklöcher bzw. Poren mit Aspektverhältnissen von beispielsweise 1 zu 300 und mehr in einer im wesentlichen regelmäßigen Anordnung in Silizium geätzt werden. Da das elektrochemische Porenätzverfahren bei geeignet gewählten Parametern eine Änderung des Porenabstandes (Pitch) in bestimmten Grenzen zuläßt, kann durch Änderung des Porenabstandes oder das Weglassen einer ganzen Reihe von Poren in der ansonsten regelmäßigen Anordnung von Sacklöchern bzw. Poren die Dicke der resultierenden Siliziumwände lokal verändert werden.

Um Poren zu erhalten, die durch das Trägermaterial bzw. Substrat (Si-Wafer) gehen und auf den beiden Oberflächen des Trägermaterials geöffnet sind, wird nach der Ätzung der Sacklöcher auf der Rückseite des Si-Wafers, z.B. durch eine KOH-Ätzung, Silizium abgetragen, während die Vorderseite des Wafers und die Innenseite der Sacklöcher bzw. Poren durch eine Maskenschicht, wie z.B. eine durch CVD-Abscheidung erzeugte Siliziumnitridschicht in einer Dicke von beispielsweise 100 nm, geschützt werden. Die Maskenschicht kann beispielsweise mittels HF-Behandlung entfernt werden. Zum rückseitigen Abtragen des Si-Wafers eigenen sich gleichermaßen Sputter-, Laserablations und/oder Polierprozesse, beispielsweise ein CMP-Prozeß.

Dadurch wird ein Silizium-Wafer bzw. Silizium-Trägermaterial erzeugt, das matrixartig mit regelmäßigen Poren versehen ist, wobei die Poren durchgehende Röhren darstellen, welche die Vorder- und die Rückseite des Wafers miteinander verbinden.

Der Durchmesser dieser Poren kann nach deren Herstellung z.B. durch Ätzen in KOH vergrößert bzw. aufgeweitet werden. Wird Si (100) als Ausgangsmaterial verwendet, so entstehen bei einer solchen Ätzung auf Grund der Kristallstruktur im wesentlichen quadratische Poren. Geht man beispielsweise von einem Porendurchmesser von ca. 5 µm mit einem Abstand zwischen den Mittelpunkten zweier Poren (Pitch) von 12 µm aus, so kann dadurch der Porendurchmesser z.B. von 5 µm auf 10 bis 11 µm vergrößert werden. Die Dicke der Siliziumwände zwischen den Poren nimmt dabei gleichzeitig auf 2 bis 1 µm ab. Auf diese Weise wird quasi ein quadratisches Gitter aus dünnen Siliziumwänden erhalten. Die Tiefe der Poren bzw. die Länge der Siliziumwände entspricht dabei der ursprünglichen Dicke des Silizium-Wafers, vermindert um die Dicke der beim Öffnen der Poren auf der Rückseite abgetragenen Si-Schicht.

In dem Oxidationsschritt (d) wird das derart erhaltene Gitter in einem thermischen Oxidationsprozeß, z.B. bei einer Temperatur von 1100°C und einer Dauer von 6 Stunden, durch Oxidation in Abhängigkeit von der jeweiligen Porenwanddicke in SiO₂ überführt. Die Struktur des Substrates wird dabei bis auf eine Volumenzunahme der Wandbereiche durch die Oxidation von Si zu SiO₂ im wesentlichen nicht verändert.

Wird in Schritt (b) der Abstand der Sacklöcher bzw. Poren voneinander periodisch, beispielsweise alle 5, 10 oder 20 Poren, geringfügig, z.B. um 1 µm, erhöht, so entsteht dadurch eine Überstruktur, die sich aus Bereichen mit Arrays aus Poren (beispielsweise 5 x 5, 10 x 10, 20 x 20) zusammensetzt. Die Dicke der Siliziumwände ist zwischen diesen Bereichen um den Betrag des erhöhten Porenabstandes größer als die Dicke der Siliziumwände innerhalb der Bereiche. Bei anschließender Oxidation werden die Bereiche mit dünnen Siliziumwänden vollständig zu SiO₂ oxidiert. Bei den Übergängen zwischen den Bereichen, die eine erhöhte Wanddicke aufweisen, werden die Siliziumwände jedoch nicht vollständig oxidiert, so daß ein Siliziumkern in den Wänden bestehen bleibt, wobei der Kern aus Silizium über den Querschnitt zur Außenseite der den Rahmen bildenden Wände hin jeweils in Siliziumdioxid übergeht. Es entstehen dadurch lokal vollständig transparente Bereiche aus SiO₂, die durch nicht-transparente Wände mit Siliziumkern voneinander getrennt sind.

Für die Herstellung des Wellenleiters, d.h. der ersten Schicht, wird bevorzugt ein CVD-Prozeß verwendet. Jedoch können auch Sputter-, Bedampfungs- oder naßchemische Anlagerungsschritte herangezogen werden. Im Gegensatz zu Sputter- oder Bedampfungsprozessen kann mit Hilfe eines CVD-Verfahrens trotz des großen Aspektverhältnisses eine homogene Abscheidung des Wellenleitermaterials (des Schichtaufbaus) über die gesamte Länge der Poren erzielt werden. Wird Si₃N₄ als Wellenleitermaterial verwendet, so kann es beispielsweise aus DCS (Dichlorsilan) und NH₃ als Precursoren in einem Reaktor bei einer Temperatur von 650°C und einem Druck von beispielsweise 400 mTorr abgeschieden werden.

Da das Wellenleitermaterial ganzflächig abgeschieden wird, kann es - falls nötig - von den planaren Oberflächen des Siliziumsubstrats anschließend wieder entfernt werden. Dies ist beispielsweise mit einem CMP-, Sputter- oder Ätzprozeß möglich. Beispielsweise eignet sich auch eine Plasma-Ätzung, mit der es insbesondere möglich ist, die bevorzugte trichterförmige Struktur des Wellenleiters in den Porenöffnungen zu erzeugen.

Die Erfindung eignet sich für ein Verfahren zum Nachweis chemischer bzw. biochemischer Reaktion und/oder Bindungen, mit den Schritten:
- Bereitstellen einer Vorrichtung mit einem flächig ausgebildeten Trägermaterial, welches über zumindest einen Oberflächenbereich verteilt eine Vielzahl von Poren aufweist, welche sich von einer Oberfläche des Trägermaterials zu der gegenüberliegenden Oberfläche durchgängig erstrecken, wobei die Poren durch eine Porenbegrenzungsfläche der in dem Trägermaterial ausgebildeten Porenwände entlang der Porenlängsachsen begrenzt sind und Fängermoleküle, gegebenenfalls über Linkermoleküle, daran immobilisiert sind;
- Einleiten einer zu untersuchenden Substanz in zumindest eine der Poren des Trägermaterials, wobei der Brechungsindex n_{Pore} der zu untersuchenden Substanz größer als der Brechungsindex n_{Porenwand} der Porenwand im Bereich der Porenbegrenzungsfläche ist;
- Auskoppeln von Lumineszenzlicht der zu untersuchenden Substanz als Wellenleitermoden der einen Wellenleiter bildenden Pore; und
- Untersuchen des Lumineszenzlichts des zu untersuchenden Materials.

Bei diesem Verfahren ist der Brechungsindex n_{Pore} des in die Pore eingeleiteten Analyten (gas- oder flüssigförmig) größer als der Brechungsindex n_{Porenwand} der die Poren begrenzenden Porenwände. Somit stellen die mit dem Analyten gefüllten Poren selbst Wellenleiter(kerne) dar, so daß die Poren als sogenannte 'liquid core waveguides' bezeichnet werden.

Für diese Ausführung eines Wellenleiters, dessen Kern die mit dem Analyten gefüllte Pore selbst darstellt, gelten analoge Überlegungen zu Varianten und Geometrien der Struktur, wie sie für abgeschiedene Wellenleiter bereits oben beschrieben wurden. Beispielsweise kann das Trägermaterial mit einer weiteren Überstruktur beispielsweise zur Ausbildung von Bereichen/Kompartments versehen werden. Um ein möglichst effektives Einkoppeln von Licht in die Wellenleiter zu gewährleisten, sollten - wie auch bei den oben beschriebenen Ausführungsformen - scharfe Kanten an den Öffnungen der Poren vermieden werden. Vorzugsweise weist der Öffnungsbereich der Poren eine trichterartige Struktur auf, wobei die optimale Geometrie von der Winkelverteilung des Anregungslichts abhängt.

Vorzugsweise umfaßt das Verfahren zusätzlich den Schritt eines Einkoppeln von Anregungslicht als Wellenleitermoden in die Pore zum Anregen des zu untersuchenden Materials.

Die vorliegende Erfindung wird nachfolgend unter Bezugnahme auf die begleitenden Zeichnungen bevorzugter Ausführungsformen beispielhaft beschrieben. Es zeigt:
- Fig.1(A) bis (C): Schematische Querschnittsansichten bevorzugter Ausführungsformen erfindungsgemäßer Vorrichtungen, wobei die Querschnittsfläche entlang den Porenlängsachsen verläuft;
- Fig. 2(A): eine schematische Draufsicht auf eine bevorzugte Ausführungsform einer erfindungsgemäßen Vorrichtung;
- Fig. 2(B): eine schematische Querschnittsansicht der in Fig. 2(A) gezeigten Ausführungsform, wobei die Schnittfläche parallel zu den Porenlängsachsen verläuft;
- Fig. 3(A) bis (E): eine schematische Schnittansicht möglicher Porenausgestaltungen;
- Fig. 4(A): eine schematische Draufsicht auf eine bevorzugte Ausführungsform eines liquid core waveguides';
- Fig. 4(B): eine schematische Querschnittsansicht der in Fig. 4(A) gezeigten Ausführungsformen, wobei die Querschnittsebene parallel zu den Porenlängsachsen verläuft; und
- Fig. 5(A) bis (C): bevorzugte Ausgestaltungen von Porengeometrien für einen 'liquid core waveguide'.

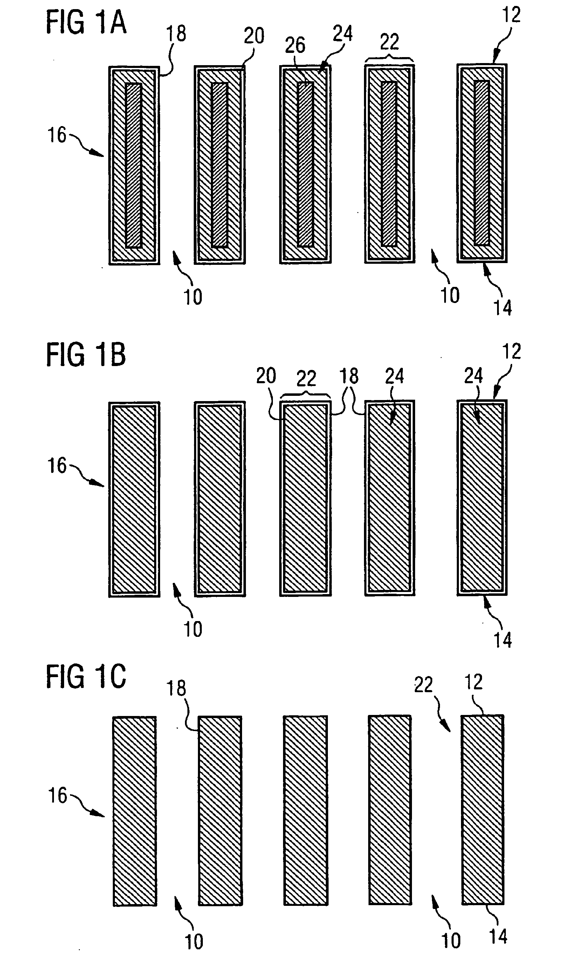

In Fig. 1(A) ist in einer schematischen Schnittansicht eine bevorzugte Ausführungsform einer erfindungsgemäßen Vorrichtung dargestellt. Die Schnittebene der stark schematisierten Schnittansicht verläuft entlang den Längsachsen von vier beispielhaft dargestellten Poren 10, welches sich von einer Oberfläche 12 des flächig ausgebildeten Trägermaterials 16 zu der gegenüberliegenden Oberfläche 14 durchgehend erstrecken. Die Poren 10 haben in dieser Ausführungsform eine zylinderförmige Gestalt, wobei die Zylinderachsen der Poren 10 mit der Oberflächennormalen des flächigen Trägermaterials 16 zusammenfallen. Betriebsgemäß kann von der einen Oberfläche 12 des Trägermaterials 16 zu der gegenüberliegenden Oberfläche 14 ein Analyt durch die Poren 10 geleitet werden, um beispielsweise biochemische Reaktionen und/oder Bindungen zu untersuchen.

Die Form einer Pore 10 wird jeweils definiert durch eine Porenbegrenzungsfläche 18, welche in diesem Fall den Poren 10 jeweils eine zylinderförmige Gestalt gibt. Die Stirnflächen der Zylinder, welche die Poren 10 definieren, sind offen, so daß ein Analyt beispielsweise von der Oberfläche 12 eingeleitet und bei der Oberfläche 14 die Poren 10 verlassen kann. Die Porenbegrenzungsfläche 18, welche die Pore 10 entlang deren Porenlängsachse begrenzt, stellt die Außenfläche einer ersten Schicht 20 dar, welche ein Teil der Porenwand 22 ist. Die Porenwände 22 sind derjenige Volumenanteil des Trägermaterials, welcher sich zwischen den Poren 10 erstreckt. Somit trennen die Porenwände 22 die Poren 10 voneinander. Die Porenbegrenzungsflächen 18 stellen somit die jeweiligen Grenzflächen zwischen den Porenwänden 22 und dem Inneren der Poren 10 dar.

In der in Fig. 1(A) dargestellten Ausführungsform weisen sämtliche Porenwände 22 über ihre gesamte Länge einen Schichtaufbau auf, dessen äußerste Schicht die erste Schicht 20 ist. Die erste Schicht 20 ist an einer zweiten Schicht 24 angeordnet, welche von der zugeordneten Pore 10 beabstandet ist. Die zweite Schicht 24 ist von der jeweiligen Pore 10 durch die erste Schicht 20 in der vorliegenden Ausführungsform getrennt.

Während in der in Fig. 1(B) dargestellten Ausführungsform die Porenwände 22 aus der ersten Schicht 20 und der zweiten Schicht 24 bestehen, wobei die zweite Schicht 24 den gesamten Kern der Porenwände 22 bzw. des Trägermaterials 16 ausfüllt, ist in der in Fig. 1(A) gezeigten Ausführungsform eine dritte Schicht 26 vorgesehen, welche vorzugsweise den Kernbereich der Porenwände 22 darstellt.

Der Brechungsindex n_{Wellenleiter} der ersten Schicht 20 ist größer als der Brechungsindex n₂ der zweiten Schicht 24. Betriebsmäßig wird ein Analyt in die Poren 10 eingeleitet, dessen Brechungsindex n_{Pore} ebenfalls kleiner als der Brechungsindex n_{Wellenleiter} der ersten Schicht 20 ist. Die erste Schicht 20 des Schichtaufbaus der Porenwände 22 ist somit von der zweiten Schicht 24 sowie dem Analyten in den Poren 10 umgeben, welche jeweils einen kleineren Brechungsindex aufweisen. Diese Ausgestaltung der Schichten mit geeignet gewählten Brechungsindizes ermöglicht es, daß sich in der ersten Schicht 20 eine elektromagnetische Welle in Form von Wellenleitermoden ausbreiten, wobei die Ausbreitungsrichtung parallel zu den Porenlängsachsen verläuft. Die Wellenleitermoden (Hauptmode und Moden höherer Ordnung) werden somit im porennahen Bereich der Poren 10 in der ersten Schicht 20 geführt. Zwar ist bei einer derartigen Anordnung die Intensität der elektromagnetischen Welle innerhalb der ersten Schicht 20 größer als in den angrenzenden Schichten, jedoch dringt insbesondere in den an die Porenbegrenzungsfläche 18 angrenzenden Raum innerhalb der Pore 10 ein evaneszentes elektromagnetisches Feld der elektromagnetischen Welle ein. Dieses evaneszente Feld klingt in einer Richtung, welche senkrecht auf der Längsachse des Wellenleiters steht, exponentiell ab.

Wird ein optisches Anregungssignal in die erste Schicht 20 eingeleitet, so können durch das evaneszente Feld der im Wellenleiter 20 geführten Moden zu untersuchende Substanzen, welche sich an oder in unmittelbarer Umgebung der zugeordneten Porenbegrenzungsfläche 18 befinden, optisch angeregt werden. Umgekehrt können Photonen, welche von dem zu untersuchenden Material im Evaneszenzfeldbereich emittiert werden, das Trägermaterial 16 als geführte Wellenleitermoden über die erste Schicht 20 verlassen.

Folglich unterliegen die in Fig. 1(A) und (B) dargestellten Ausführungsformen nicht dem aus dem Stand der Technik bekannten Dämpfungsprinzip aufgrund von Mehrfachreflexionen an nicht perfekt reflektierenden Porenwänden. Statt dessen kann Anregungslicht verlustarm als Wellenleitermoden in der ersten Schicht 20 eingeführt und geleitet werden. Das zu detektierende optische Signal kann als Wellenleitermode in der ersten Schicht 20 aus dem Trägermaterial 16 ausgekoppelt und einem Detektor zugeleitet werden.

Zur Einkopplung von Anregungslicht in die erste Schicht 20 kann eine oder mehrere beliebig angeordnete Anregungslichtquellen gegebenenfalls in Verbindung mit diffraktiven optischen Elementen verwendet werden. Das Anregungslicht kann gleichzeitig oder sequentiell aus verschiendenen Richtungen mit gleichen oder verschiedenen Wellenlängen eingestrahlt werden. Die Lichtquellen können kohärente oder nicht-kohärente Lichtquellen sein, welche kohärent oder nicht-kohärent überlagert werden. Beispielsweise kann die Anregung hologrammartig erfolgen.

Zur Detektion der Lumineszenz wird zumindest ein Detektor verwendet, beispielsweise CCD-Kameras, Photodioden-Arrays, Avalanche-Photodioden-Arrays, Multichannelplates und/oder Vielkanal-Photomultiplier.

Die Schichten, der in Fig. 1(A) dargestellten Ausführungsform (Vierkomponentenausführungform) können beispielsweise wie folgt gewählt werden:
Hauptbestandteil des in den Poren 10 befindlichen Analyten (Brechungsindex n_{Pore}): Luft, H₂O einschließlich wässrige Pufferlösungen, die gegebenenfalls geringe Anteile an organischen Lösungsmitteln enthalten können, Glyzerin
Erste Schicht 20 (Brechungsindex n_{Wellenleiter}) : Ta₂O₅, HfO₂, Y₂O₃, Al₂O₃, Nb₂O₅, Si₃N₄, TiO₂, TaO₂ und/oder Nitrid oder Oxynitrid von Al, Si oder Hf
Zweite Schicht 24 (Brechungsindex n₂) : Glas, Kunststoff, transparente Dielektrika und/oder SiO₂
Dritte Schicht 26 (Brechungsindex n₃): Metalle, Halbleiter, insbesondere Silizium (undotiert, p oder n dotiert), Kunststoff, insbesondere anorganische oder organische Polymere
Für die in Fig. 1(B) dargestellte Ausführungsform (Dreikomponentenausführungsform) können die Materialien der Schichten beispielsweise wie folgt gewählt werden:
   Hauptbestandteil des in den Poren 10 befindlichen Analyten (Brechungsindex n_{Pore}): Luft, H₂O einschließlich wässrige Pufferlösungen, die gegebenenfalls geringe Anteile an organischen Lösungsmitteln enthalten können, Glyzerin
   Erste Schicht 20 (Brechungsindex n_{Wellenleiter}): Ta₂O₅, HfO₂, Y₂O₃, Al₂O₃, Nb₂O₅, Si₃N₄, TiO₂, TaO₂ und/oder Nitrid oder Oxynitrid von Al, Si oder Hf
   Zweite Schicht 24 (Brechungsindex n₂): Glas, Kunststoff, transparente Dielektrika und/oder SiO₂
   Vorteilhaft kann ein gezielter Einbau von Streuzentren bzw. Fehlstellen an den Porenbegrenzungsflächen 18 und/oder in den Wellenleitern, d.h. in der ersten Schicht 20, selbst sein. Diese Streuzentren bzw. Fehlstellen können beispielsweise durch Aufrauhen der Porenbegrenzungsflächen 18 bzw. durch gezieltes Dotieren der ersten Schicht 20 erfolgen. Durch eine derartige Maßnahme kann das Ein- und Auskoppeln von Anregungslicht verbessert werden.

In Fig. 1(C) ist eine weitere erfindungsgemäße Ausführungsform gezeigt. Bei der in Fig. 1(C) dargestellten Ausführungsform werden die Poren 10 selbst als optischer Wellenleiter genutzt. Die Poren 10 stellen somit einen sogenannten 'liquid core waveguide' dar. Dies ist dadurch möglich, daß für die Brechungsindizes der Porenwände 22 sowie des betriebsmäßig in den Poren 10 enthaltenden Analyten gilt: n_{Pore} > n_{Porenwand}, wobei n_{Porenwand} der Brechungsindex der Porenwände 22 des Trägermaterials 16 ist.

Im Unterschied zu den im Zusammenhang mit Figs. 1 (A) und (B) dargestellten Ausführungsformen, bei welchen der Wellenleiter in den Porenwänden gebildet wird, stellt bei der in Fig. 1(C) dargestellten Ausführungsform die Pore 10 selbst den Wellenleiter dar. Anregungslicht bzw. emittierte Photonen des zu untersuchenden Materials können das Trägermaterial 16 in Form von verlustarm propagierenden Wellenleitermoden verlassen, ohne daß der eingangs beschriebene Dämpfungsmechanismus aufgrund von Mehrfachreflexionen zu empfindlichen Signalverlusten führt.

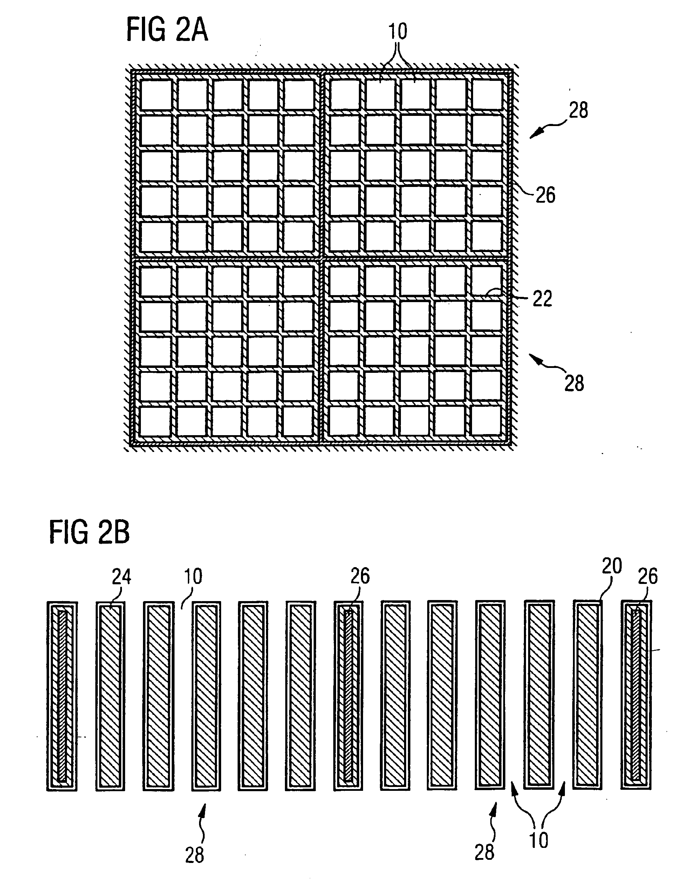

In Fig. 2(A) ist in Draufsicht eine besonders bevorzugte Ausführungsform einer erfindungsgemäßen Vorrichtung gezeigt. Bei dieser Ausführungsform ist das regelmäßig mit Poren 10 durchsetzte Trägermaterial 16 zusätzlich einer Überstrukturierung zur Erzeugung einer weiteren Überstruktur unterworfen worden. Das Trägermaterial 16 ist in kleine Bereiche bzw. Kompartments 28 unterteilt, welche jeweils zumindest eine der Poren 10 umfassen. Die Bereiche 28, von welchen in Fig. 2(A) beispielhaft vier dargestellt sind, sind vorzugsweise mit Hilfe von rahmenförmigen Wänden aus einem vorzugsweise reflektierenden Material von angrenzenden Bereichen 28 abgetrennt.

Wie in Zusammenhang mit Fig. 1(A) beschrieben wurde, können die Porenwände 22 eine dritte Schicht 26 aufweisen, die zur Ausbildung der reflektierenden Wände herangezogen werden kann. Beispielsweise können die reflektierenden rahmenförmigen Wände aus Metall oder Halbleitern ausgebildet sein. Innerhalb der Bereiche 28 bestehen die Porenwände 22 zwischen den Poren 10 vorzugsweise aus einem Material, welches für Wellenlängen in dem vorbestimmten bzw. interessierenden Spektralbereich transparent ist. Durch diese Geometrie wird wirkungsvoll die Ausbreitung von Streulicht und das Übersprechen eines optischen Signals von einem Bereich 28 zu einem angrenzenden Bereich 28 unterdrückt.

In Fig. 2(B) ist die in Fig. 2(A) dargestellte Ausführungsform in einer stark schematisierten Schnittansicht gezeigt, wobei die Schnittebene parallel zu den Porenlängsachsen der Poren 10 verläuft. Im vorliegenden Fall ist das flächige Trägermaterial 16 von matrixförmig regelmäßig angeordneten Poren 10 durchsetzt, wobei die Poren 10 jeweils rechteckig zylinderförmig ausgebildet sind. Die Überstruktur bildet eine rechteckförmige Rahmenstruktur, wobei die Rahmen ebenfalls rechteckig zylindrisch ausgebildet sind. Die Längsachsen der zylinderförmigen Rahmen, welche die Bereiche 28 definieren, sind parallel zu den Porenlängsachsen der Poren 10. Im vorliegenden Fall weist beispielsweise jede sechste Porenwand 22 zwischen den Poren 10 einen Kernbereich bzw. eine dritte Schicht 26 auf, welche aus einem reflektierenden. Material besteht. Die übrigen Porenwände 22 innerhalb des Bereichs 28 sind für Wellenlängen im vorbestimmten Spektralbereich transparent.

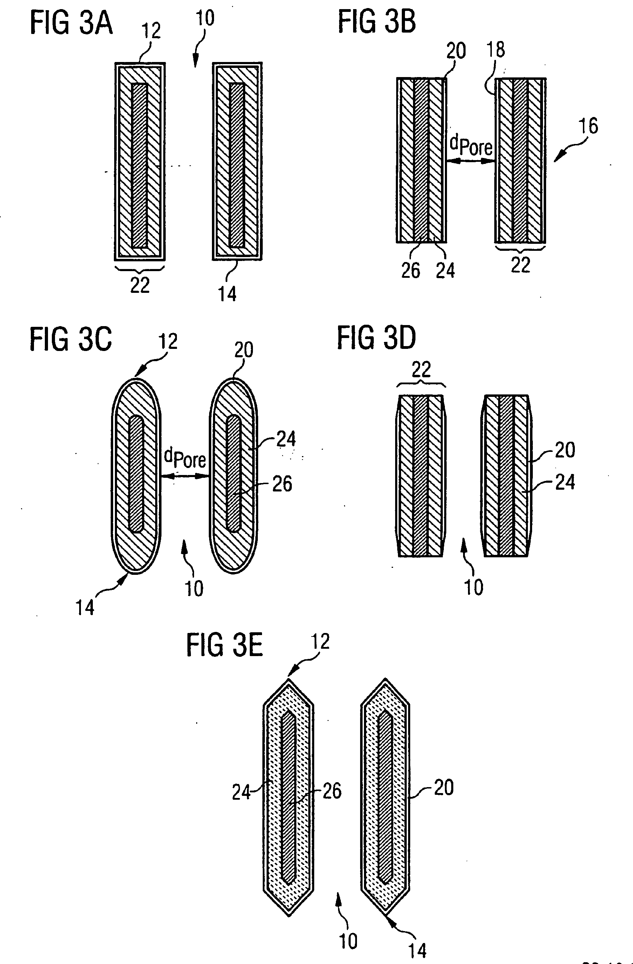

In Fig. 3(A) bis (E) sind stark schematisiert Schnittansichten von bevorzugten Porenwandgeometrien gezeigt. Um ein möglichst effektives Ein- sowie Auskoppeln von Licht in bzw. aus den Wellenleitern 20 zu gewährleisten, ist eine besondere Ausgestaltung der Porenwandgeometrie nahe den Oberflächen 12 bzw. 14 des Trägermaterials 16 vorteilhaft. Als besonders vorteilhaft hat sich sich insbesondere die in Fig. 3(C) gezeigte Variante erwiesen, bei welcher der Durchmesser d_{Pore} der Poren 10 sich nahe den Oberflächen 12 und 14 des Trägermaterials 16 in Richtung dieser Oberflächen 12 und 14 kontinuierlich vergrößert. Die Poren 10 weisen somit in dem oberflächennahen Bereich des Trägermaterials 16 eine konische bzw. tricherartige Struktur auf.

Um eine möglichst effiziente Einkopplung von Licht in die erste Schicht 20 zu erzielen, sollten folgende Faktoren berücksichtigt werden:
(1) Je größer der Anteil der Wellenleiterstruktur auf den Oberflächen 12 bzw. 14 des Trägermaterials 16 gegenüber den nicht mit der Wellenleiterstruktur bzw. dem Schichtaufbau versehenen Oberfläche 12, 14 des Trägermaterials 16 ist, desto höher ist der zu erwartende Einkopplungsanteil des auftreffenden Lichts. Diesem Faktor genügen insbesondere die in Fig. 3(A) und (C) dargestellten Ausführungsformen in besonderen Maße.
(2) Scharfe Kanten innerhalb der Schichtstruktur bzw. der ersten Schicht 20 im inneren Bereich der Poren 10 sollten vermieden werden.

Besonders bevorzugt ist die Ausbildung einer trichterartigen Struktur im Öffnungsbereich der Poren 10, wie sie in Fig. 3(C) dargestellt ist. Die genaue Geometrie im Öffnungsbereich der Poren 10, d.h. der Öffnungswinkel, die Schichtdicken sowie der Krümmung der Oberfläche, hängt auch von der Winkelverteilung des Anregungslichts ab. Jedoch sind auch die in Figs. 3(B) und (E) gezeigten Ausgestaltungen möglich. Die in Fig. 3(E) gezeigte Variante zeichnet sich insbesondere dadurch aus, daß die pyramidenartigen Porenwandbereiche im Bereich der Oberflächen 12 und 14 definierte, gegenüber der Ebene der Oberflächen 12, 14 geneigte Einkoppelflächen aufweisen. So kann unter einem einstellbaren Winkel zu dieser Einkoppelfläche Anregungslicht eingekoppelt werden. Insbesondere ist es auf diese Weise möglich, lediglich eine einzige Wellenleitermode selektiv anzuregen. Die Oberseite 12 und Unterseite 14 des Trägermaterials können verschiedene Porenöffnungsgeometrien aufweisen.

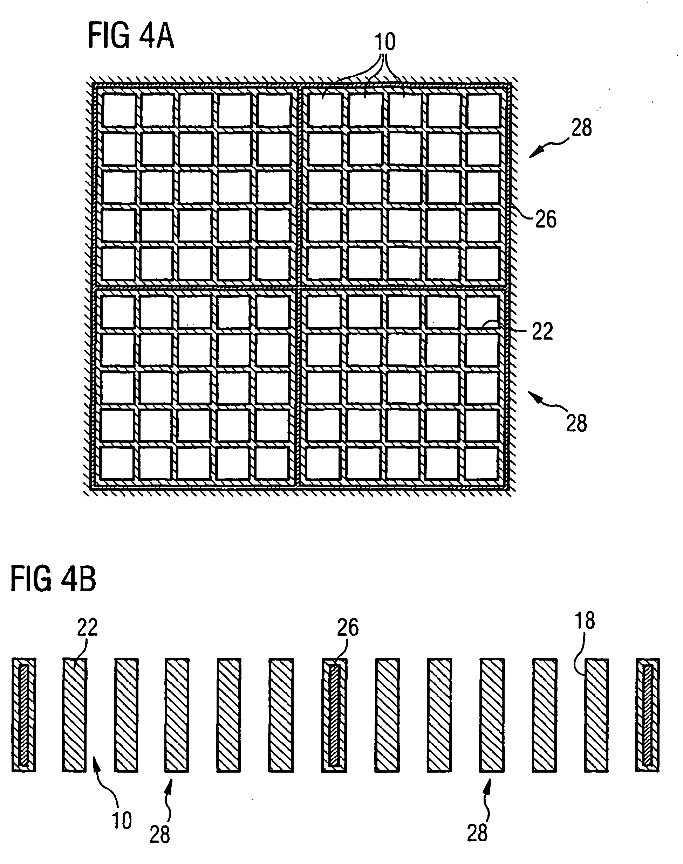

In Fig. 4(A) ist in Draufsicht und in Fig. 4(B) in Schnittansicht eine weitere erfindungsgemäße Ausführungsform dargestellt. Bei der in Fig. 4 dargestellten Ausführungsform handelt es sich um eine Ausgestaltung des bereits beschriebenen Konzepts, bei welchem die Poren 10 selbst die Wellenleiter bilden, so daß die Pore als sogenannter 'liquid core waveguide' genutzt wird. Auch in diesem Fall kann das Trägermaterial 16, welches von einer regelmäßigen Anordnung von Poren 10 durchsetzt ist, einer weiteren beliebigen Überstrukturierung unterworfen werden. Wie bereits ausführlich in Zusammenhang mit Fig. 2 beschrieben, kann diese Überstrukturierung beispielsweise in Form einer Einteilung von einer Vielzahl der Poren 10 in abgegrenzte Bereiche bzw. Kompartments erfolgen, welche voneinander durch reflektierende und/oder nicht-transparente Wände 26 getrennt sind. Die rahmenförmigen Wände 26, welche die Bereiche 28 abgrenzen, können auch auf zumindest einer Seite offen gestaltet werden. Die Zylinderachsen der vorzugsweise zylinderförmig gestalteten Wände 26 der Bereiche 28 sind derart angeordnet, daß sie zu den Porenlängsachsen der Poren 10 parallel verlaufen.

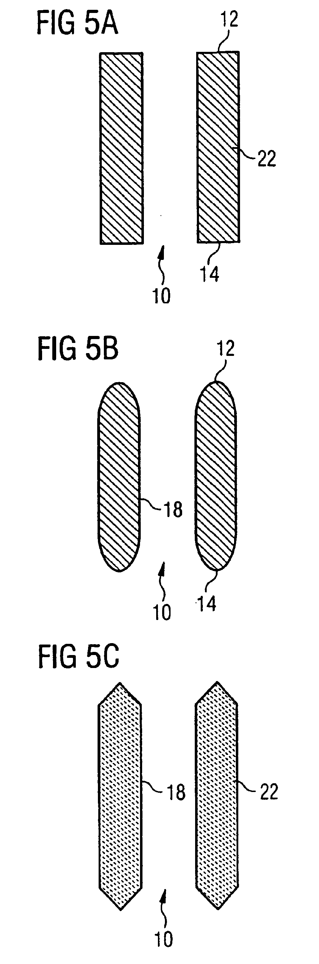

In Fig. 5(A) bis (C) sind vorteilhafte Ausgestaltungen von Porengeometrien für einen 'liquid core waveguide' in einer stark schematisierten Schnittansicht dargestellt. Ähnlich wie bei der in Zusammenhang mit Fig. 3(C) dargestellten Ausführungsform, ist auch bei der Nutzung der Poren 10 als Wellenleiter selbst eine trog- bzw. trichterartige Aufweitung der Poren 10 im oberflächennahen Bereich des Trägermaterials 16 zwecks besserer Ein- und Auskopplung des Lichts vorteilhaft. Fig. 5 (C) entspricht der bereits in Zusammenhang mit Fig. 3(E) dargestellten Variante mit definierten Einkoppelflächen.

### Bezugszeichenliste

- 10: Pore
- 12: Oberfläche des flächigen Trägermaterials
- 14: der Oberfläche 12 gegenüberliegende Oberfläche des Trägermaterials
- 16: flächiges Trägermaterial
- 18: Porenbegrenzungsfläche
- 20: erste Schicht des Schichtaufbaus der Porenwände
- 22: Porenwand
- 24: zweite Schicht des Schichtaufbaus der Porenwände
- 26: dritte Schicht des Schichtaufbaus der Porenwände
- 28: Bereiche bzw. Kompartments

## Patentansprüche

1. Vorrichtung mit einem flächig ausgebildetem Trägermaterial (16), welches über zumindest einen Oberflächenbereich verteilt eine Vielzahl von Poren (10) aufweist, welche sich von einer Oberfläche (12) des Trägermaterials (16) zu der gegenüberliegenden Oberfläche (14) durchgängig erstrecken, wobei
- die Poren (10) jeweils durch eine Porenbegrenzungsfläche (18) der in dem Trägermaterial (16) ausgebildeten Porenwände (22) entlang der jeweiligen Porenlängsachsen begrenzt sind,
- zumindest ein Teil der Porenwände (22) zumindest bereichsweise einen Schichtaufbau mit einer die Porenbegrenzungsfläche (18) bildenden ersten Schicht (20) und einer an die erste Schicht (20) angrenzenden von der Porenbegrenzungsfläche (18) beabstandeten zweiten Schicht (24) aufweist und
- der Brechungsindex n_{wellenleiter} der ersten Schicht (20) grösser als der Brechungsindex n₂ der zweiten Schicht (24) ist.

2. Vorrichtung nach Anspruch1, wobei die erste Schicht (20) in einem vorbestimmten Spektralbereich transparent ist.

3. Vorrichtung nach Anspruch 2, wobei der vorbestimmte Spektralbereich der optisch sichtbare, ultraviolette oder infrarote Spektralbereich ist.

4. Vorrichtung nach einem der vorangegangenen Ansprüche, wobei der Schichtaufbau eine an die zweite Schicht (24) angrenzende und von der ersten Schicht (20) beabstandete dritte Schicht (26) aufweist.

5. Vorrichtung nach einem der vorangegangenen Ansprüche, wobei die erste Schicht (20) Ta₂O₅, HfO₂, Y₂O₃, Al₂O₃, Nb₂O₅, Si₃N₄, TiO₂, TaO₂ und/oder Nitrid oder Oxynitrid von Al, Si oder Hf, und die zweite Schicht (24) Glas, Kunststoff, transparente Dielektrika und/oder SiO₂ umfasst.

6. Vorrichtung nach einem der vorangegangenen Ansprüche, wobei die dritte Schicht (26) Metall, Halbleiter und/oder Kunststoff umfasst.

7. Vorrichtung nach Anspruch 6, wobei die dritte Schicht (26) Silizium umfasst.

8. Vorrichtung nach einem der vorangegangenen Ansprüche, wobei sich der Porendurchmesser (d_{Pore}) in einem oberflächennahen Bereich des Trägermaterials (16) zu der Oberfläche (12, 14) des Trägermaterials (16) hin vergrössert.

9. Vorrichtung nach einem der vorangegangenen Ansprüche, wobei die Poren (10) im wesentlichen zylinder-oder streifenförmig sind.

10. Vorrichtung nach einem der vorangegangenen Ansprüche, wobei die erste Schicht (20) Streuzentren und/oder Fehlstellen aufweist.

11. Vorrichtung nach einem der vorangegangenen Ansprüche, wobei die Poren (10) einen Porendurchmesser (d_{Pore}) im Bereich von 500 nm bis 100 µm aufweisen.

12. Vorrichtung nach einem der vorangegangenen Ansprüche, wobei das Trägermaterial (16) eine Dicke zwischen 100 bis 5.000 µm aufweist.

13. Vorrichtung nach einem der vorangegangenen Ansprüche, wobei die Porendichte der Poren (10) im Bereich von 10⁴ bis 10⁸/cm² liegt.

14. Vorrichtung nach einem der vorangegangenen Ansprüche, wobei das Trägermaterial (16) zumindest eine Überstruktur (26) aus einem in dem vorbestimmten Spektralbereich reflektierenden und/oder nicht transparenten Material aufweist.

15. Vorrichtung nach Anspruch 14, wobei die Überstruktur ein im wesentlichen zylinderförmiger Rahmen (26) ist, welcher sich von der einen Oberfläche (12) zu der gegenüberliegenden Oberfläche (14) des Trägermaterials (16) erstreckt und welcher zumindest eine der Poren (10) enthält.

16. Vorrichtung nach Anspruch 15, wobei der Rahmen (26) zumindest einen Kern aus Silizium umfasst.

17. Vorrichtung nach einem der vorangegangenen Ansprüche, wobei an die Porenbegrenzungsfläche (18) zumindest einer der Poren (10) zumindest bereichsweise kovalent Fängermoleküle, ausgewählt aus der Gruppe, bestehend aus DNA, Proteinen und Liganden, gebunden sind.

18. Vorrichtung nach Anspruch 17, wobei die Fängermoleküle Oligonukleotidsonden sind, die über endständige Amino- oder Thiolgruppen an Linkermoleküle gebunden sind, die wiederum über kovalente und/oder ionische Gruppen an die Porenbegrenzungsfläche gebunden sind.

19. Verwendung einer Vorrichtung nach einem der vorangegangenen Ansprüche als Basis für einen Probenträger in Verfahren zum Nachweis biochemischer Reaktionen und/oder Bindungen sowie hierfür insbesondere zur Untersuchung von enzymatischen Reaktionen, Nukleinsäure-Hybridisierungen, Protein-Protein-Wechselwirkungen und Protein-Liganden-Wechselwirkungen.

20. Verfahren zum Nachweis chemischer bzw. biochemischer Reaktionen und/oder Bindungen mit den Schritten:
- Bereitstellen einer Vorrichtung nach Anspruch 17 oder 18;
- Einleiten einer zu untersuchenden Substanz in zumindest eine der Poren (10) des Trägermaterials (16), wobei der Brechungsindex n_{Pore} der zu untersuchenden Substanz kleiner als der Brechungsindex n_{Wellenleiter} der ersten Schicht ist;
- Auskoppeln von Lumineszenzlicht der zu untersuchenden Substanz; und
- Untersuchen des Lumineszenzlichts des zu untersuchenden Materials.

21. Verfahren nach Anspruch 20, wobei das Verfahren zusätzlich den Schritt eines Einkoppelns von Anregungslicht als Wellenleitermoden in die erste Schicht (20) des Schichtaufbaus zum Anregen des zu untersuchenden Materials an der Porenbegrenzungsfläche (18) in einem Evaneszenzfeld der Wellenleitermoden umfasst.

22. Verfahren zum Nachweis chemischer bzw. biochemischer Reaktionen und/oder Bindungen mit den Schritten:
- Bereitstellen einer Vorrichtung nach Anspruch 17 oder 18;
- Einleiten einer zu untersuchenden Substanz in zumindest eine der Poren (10) des Trägermaterials (16), wobei der Brechungsindex n_{Pore} der zu untersuchenden Substanz kleiner als der Brechungsindex n_{Wellenleiter} der ersten Schicht ist;
- Einkoppeln von Anregungslicht als Wellenleitermoden in die erste Schicht (20) des Schichtaufbaus zum Anregen des zu untersuchenden Materials an der Porenbegrenzungsfläche (18) in einem Evaneszenzfeld der Wellenleitermoden; und
- Untersuchen des aus der ersten Schicht (20) nach Wechselwirkung mit dem zu untersuchenden Material ausgekoppelten Anregungslichts.

23. Verfahren zur Herstellung einer Vorrichtung nach einem der Ansprüche 1 bis 18 mit den Schritten:
(a) Bereitstellen eines flächigen Trägermaterials (16) aus Silizium mit zwei sich gegenüberliegenden Oberflächen;
(b) Erzeugen von Sacklöchern, deren Tiefe geringer als die Dicke des Trägermaterials ist, durch elektrochemisches Ätzen von einer der Oberflächen (12, 14) des Trägermaterials (16);
(c) Abtragen des Trägermaterials (16) von der gegenüberliegenden Oberfläche (14, 12) mindestens bis zum Boden der Sacklöcher zum Erhalten von Poren (10), welche sich von der einen Oberfläche (12, 14) zu der gegenüberliegenden Oberfläche (14, 12) des Trägermaterials (16) durchgängig erstrecken;
(d) Unterwerfen des in Schritt (c) erhaltenen Trägermaterials (16) einer Oxidation, so dass die Porenwände (22) des Trägermaterials (16) zumindest im porennahen Bereich aus SiO₂ zur Bildung der zweiten Schicht (24) bestehen; und
(e) Beschichten zumindest der Porenwände (22) zur Ausbildung der ersten Schicht (20).

24. Verfahren zum Steuern chemischer bzw. biochemischer Reaktionen bzw. Synthesen mit den Schritten:
- Bereitstellen einer Vorrichtung nach Anspruch 17 oder 18;
- Einleiten einer Synthesesubstanz in zumindest eine der Poren des Trägermaterials, wobei der Brechungsindex n_{Pore} der Synthesesubstanz kleiner als der Brechungsindex n_{Wellenleiter} der ersten Schicht ist;
- Einkoppeln von Licht als Wellenleitermoden in die erste Schicht des Schichtaufbaus zum optischen Anregen zumindest der Synthesesubstanz an der Porenbegrenzungsfläche in einem Evaneszenzfeld der Wellenleitermoden.

## Claims

1. Device having a two-dimensionally formed support material (16) which has, spread across at least one surface area, a multiplicity of pores (10) which stretch throughout from one surface (12) of the support material (16) to the opposite surface (14), with
- the pores (10) being bounded in each case by a pore boundary area (18) of the pore walls (22) formed in the support material (16) along the particular longitudinal axes of the pores,
- at least part of the pore walls (22) having at least in some sections a layered structure containing a first layer (20) forming the pore boundary area (18) and a second layer (24) adjacent to the first layer (20) and spaced apart from the pore boundary area (18), and
- the refractive index n_{waveguide} of the first layer (20) being greater than the refractive index n₂ of the second layer (24).

2. Device according to Claim 1, in which the first layer (20) is transparent in a predetermined spectral range.

3. Device according to Claim 2, in which the predetermined spectral range is the optically visible, ultraviolet or infrared spectral range.

4. Device according to any of the preceding claims, in which the layered structure has a third layer (26) adjacent to the second layer (24) and spaced apart from the first layer (20).

5. Device according to any of the preceding claims, in which the first layer (20) comprises Ta₂O₅, HfO₂, Y₂O₃, Al₂O₃, Nb₂O₅, Si₃N₄, TiO₂, TaO₂ and/or nitride or oxynitride of Al, Si or Hf, and the second layer (24) comprises glass, plastic, transparent dielectrics and/or SiO₂.

6. Device according to any of the preceding claims, in which the third layer (26) comprises metal, semiconductors and/or plastic.

7. Device according to Claim 6, in which the third layer (26) comprises silicon.

8. Device according to any of the preceding claims, in which the pore diameter (dₚₒᵣₑ) in a region close to the surface of the support material (16) increases towards the surface (12, 14) of the support material (16).

9. Device according to any of the preceding claims, in which the pores (10) are essentially cylinder- or strip-shaped.

10. Device according to any of the preceding claims, in which the first layer (20) has scattering centres and/or defects.

11. Device according to any of the preceding claims, in which the pores (10) have a pore diameter (dₚₒᵣₑ) in the range from 500 nm to 100 µm.

12. Device according to any of the preceding claims, in which the support material (16) has a thickness of between 100 and 5000 µm.

13. Device according to any of the preceding claims, in which the density of the pores (10) is in the range from 10⁴ to 10⁸/cm².

14. Device according to any of the preceding claims, in which the support material (16) has at least one superstructure (26) made of a material which is non-transparent and/or reflects in the predetermined spectral range.

15. Device according to Claim 14, in which the superstructure is an essentially cylinder-shaped frame (26) which stretches from the one surface (12) to the opposite surface (14) of the support material (16) and which includes at least one of the pores (10).

16. Device according to Claim 15, in which the frame (26) comprises at least one core made of silicon.

17. Device according to any of the preceding claims, in which capture molecules selected from the group consisting of DNA, proteins and ligands are covalently bound to at least some sections of the pore boundary area (18) of at least one of the pores (10).

18. Device according to Claim 17, in which the capture molecules are oligonucleotide probes which are bound via terminal amino or thiol groups to linker molecules which in turn are bound via covalent and/or ionic groups to the pore boundary area.

19. Use of a device according to any of the preceding claims as a basis for a sample support in methods of detecting biochemical reactions and/or bindings and also, to this end in particular, for studying enzymic reactions, nucleic acid hybridizations, protein-protein interactions and protein-ligand interactions.

20. Method of detecting chemical or biochemical reactions and/or bindings, comprising the steps:
- providing a device according to Claim 17 or 18;
- introducing a substance to be studied into at least one of the pores (10) of the support material (16), with the refractive index nₚₒᵣₑ of the substance to be studied being less than the refractive index n_{waveguide} of the first layer;
- coupling out luminescence light of the substance to be studied; and
- studying the luminescence light of the material to be studied.

21. Method according to Claim 20, which additionally comprises the step of coupling excitation light as waveguide modes into the first layer (20) of the layered structure in order to excite the material to be studied at the pore boundary area (18) in an evanescent field of the waveguide modes.

22. Method of detecting chemical or biochemical reactions and/or bindings, which method comprises the steps:
- providing a device according to Claim 17 or 18;
- introducing a substance to be studied into at least one of the pores (10) of the support material (16), with the refractive index nₚₒᵣₑ of the substance to be studied being less than the refractive index n_{waveguide} of the first layer;
- coupling excitation light as waveguide modes into the first layer (20) of the layered structure in order to excite the material to be studied at the pore boundary area (18) in an evanescent field of the waveguide modes; and
- studying the excitation light coupled out of the first layer (20), after interaction with the material to be studied.

23. Method of preparing a device according to any of Claims 1 to 18, which method comprises the steps:
(a) providing a two-dimensional support material (16) made of silicon and having two surfaces facing each other;
(b) generating blind holes whose depth is less than the thickness of the support material by electrochemically etching one of the surfaces (12, 14) of the support material (16);
(c) removing the support material (16) from the opposite surface (14, 12) at least to the bottom of the blind holes to obtain pores (10) which stretch throughout from the one surface (12, 14) to the opposite surface (14, 12) of the support material (16);
(d) subjecting the support material (16) obtained in step (c) to an oxidation so that the pore walls (22) of the support material (16) consist, at least in the region close to the pores, of SiO₂ to form the second layer (24); and
(e) coating at least one of the pore walls (22) in order to form the first layer (20).

24. Method of controlling chemical or biochemical reactions or syntheses, which comprises the steps:
- providing a device according to Claim 17 or 18;
- introducing a synthetic substance into at least one of the pores of the support material, with the refractive index nₚₒᵣₑ of the synthetic substance being less than the refractive index n_{waveguide} of the first layer;
- coupling light as waveguide modes into the first layer of the layered structure in order to optically excite at least the synthetic substance at the pore boundary area in an evanescent field of the waveguide modes.

## Revendications

1. Dispositif qui présente un matériau de support (16) de configuration plate qui présente de nombreux pores (10) qui sont répartis sur au moins une partie de sa surface et qui traversent l'élément de support (16) entre la surface (12) et la surface opposée (14), et dans lequel :
- les pores (10) sont tous délimités par une surface (18) qui délimite les parois (22) des pores formés dans le matériau de support (16), le long de l'axe longitudinal de chaque pore,
- au moins certaines parties des parois (22) des pores présentent une structure stratifiée, avec une première couche (20) qui forme la surface (18) de délimitation du pore et une deuxième couche (24) adjacente à la première couche (20) et située à distance de la surface (18) de délimitation du pore et dans lequel
l'indice de réfraction (n_{guide}) de la première couche (20) est supérieur à l'indice de réfraction n₂ de la deuxième couche (24).

2. Dispositif selon la revendication 1, dans lequel la première couche (20) est transparente dans une plage spectrale prédéterminée.

3. Dispositif selon la revendication 2, dans lequel la plage spectrale prédéterminée est la plage spectrale de la lumière visible, de la lumière ultraviolette ou de la lumière infrarouge.

4. Dispositif selon l'une des revendications précédentes, dans lequel la structure stratifiée présente une troisième couche (26) adjacente à la deuxième couche (24) et maintenue à distance de la première couche (20).

5. Dispositif selon l'une des revendications précédentes, dans lequel la première couche (20) contient du Ta₂O₅, HfO₂, Y₂O₃, Al₂O₃, Nb₂O₅, Si₃N₄, TiO₂, TaO₂ et/ou du nitrure ou de l'oxynitrure d'Al, de Si ou de Hf et la deuxième couche (24) contient du verre, une matière synthétique, un diélectrique transparent et/ou du SiO₂.

6. Dispositif selon l'une des revendications précédentes, dans lequel la troisième couche (26) contient un métal, un semi-conducteur et/ou une matière synthétique.

7. Dispositif selon la revendication 6, dans lequel la troisième couche (26) contient du silicium.

8. Dispositif selon l'une des revendications précédentes, dans lequel le diamètre (dₚₒᵣₑ) des pores s'agrandit en direction de la surface (12, 14) du matériau de support (16) dans une partie du matériau de support (16) proche de la surface.

9. Dispositif selon l'une des revendications précédentes, dans lequel les pores (10) ont essentiellement la forme d'un cylindre ou d'un ruban.

10. Dispositif selon l'une des revendications précédentes, dans lequel la première couche (20) présente des centres de diffusion et/ou des défauts.

11. Dispositif selon l'une des revendications précédentes, dans lequel les pores (10) ont un diamètre (dₚₒᵣₑ) compris dans la plage de 500 nm à 100 µm.

12. Dispositif selon l'une des revendications précédentes, dans lequel le matériau de support (16) a une épaisseur comprise entre 100 et 5 000 µm.

13. Dispositif selon l'une des revendications précédentes, dans lequel la densité de pores (10) est comprise dans la plage de 10⁴ à 10⁸/cm².

14. Dispositif selon l'une des revendications précédentes, dans lequel le matériau de support (16) présente au moins une superstructure (26) constituée d'un matériau réfléchissant et/ou non transparent dans la plage spectrale prédéterminée.

15. Dispositif selon la revendication 14, dans lequel la superstructure est un cadre essentiellement cylindrique (26) qui s'étend depuis une surface (12) jusqu'à la surface opposée (14) du matériau de support (16) et qui contient au moins un des pores (10).

16. Dispositif selon la revendication 15, dans lequel le cadre (26) comprend au moins une âme en silicium.

17. Dispositif selon l'une des revendications précédentes, dans lequel des molécules de piégeage dont au moins certaines parties sont covalentes et qui sont sélectionnées dans l'ensemble constitué de l'ADN, des protéines et des liants, sont liées à la surface (18) de délimitation des pores d'au moins l'un des pores (10).

18. Dispositif selon la revendication 17, dans lequel les molécules de piégeage sont des sondes d'oligonucléotides qui sont reliées par des groupes terminaux amino ou thiol à des molécules de liaison qui à leur tour sont reliées par des groupes covalents et/ou ioniques à la surface de délimitation des pores.

19. Utilisation d'un dispositif selon l'une des revendications précédentes comme base pour un porte-échantillons dans un procédé de détection de réactions et/ou de liaisons biochimiques ainsi que de réactions utilisées en particulier pour l'étude de réactions enzymatiques, d'hybridations d'acides nucléiques, d'interactions protéine-protéine et d'interactions protéine-ligand.

20. Procédé de détection de réactions et/ou de liaisons chimiques ou biochimiques, qui comporte les étapes qui consistent à :
- préparer un dispositif selon les revendications 17 ou 18,
- introduire une substance à étudier dans au moins un des pores (10) du matériau de support (16), l'indice de réfraction nₚₒᵣₑ de la substance à étudier étant inférieur à l'indice de réfraction n_{guide} de la première couche,
- faire émettre de la lumière luminescente par la substance à étudier et
- étudier la lumière de luminescence de la substance à étudier.

21. Procédé selon la revendication 20, dans lequel le procédé comporte en outre l'étape qui consiste à appliquer une lumière d'excitation en mode de guide d'onde dans la première couche (20) de la structure stratifiée pour exciter le matériau à étudier présent sur la surface (18) de délimitation des pores dans un champ d'évanescence de mode de guide d'onde.

22. Procédé de détection de réactions et/ou de liaisons chimiques ou biochimiques, qui comprend les étapes qui consistent à :
- préparer un dispositif selon les revendications 17 ou 18,
- introduire une substance à étudier dans au moins un des pores (10) du matériau de support (16), l'indice de réfraction nₚₒᵣₑ de la substance à étudier étant inférieur à l'indice de réfraction n_{guide} de la première couche,
- appliquer une lumière d'excitation dans la première couche (20) de la structure stratifiée pour exciter le matériau à étudier présent sur la surface (18) de délimitation des pores dans un champ d'évanescence de mode de guide d'onde et
- étudier la lumière d'excitation émise par la première couche (20) après interaction avec le matériau à étudier.

23. Procédé de fabrication d'un dispositif selon l'une des revendications 1 à 18, qui comporte les étapes qui consistent à :
(a) préparer un matériau de support plat (16) en silicium, qui présente deux surfaces opposées,
(b) par gravure électrochimique de l'une des surfaces (12, 14) du matériau de support (16), créer des trous aveugles dont la profondeur est inférieure à l'épaisseur du matériau de support,
(c) enlever au moins jusqu'au fond des trous aveugles le matériau de support (16) par la surface (14, 12) opposée de manière à obtenir des pores (10) qui traversent le matériau de support (16) depuis sa surface (12, 14) jusqu'à sa surface opposée (14, 12),
(d) faire subir au matériau de support (16) obtenu à l'étape (c) une oxydation de manière à former les parois (22) des pores du matériau de support (16) au moins dans la zone de SiO₂ proche des pores, pour former la deuxième couche (24) et
(e) recouvrir au moins la paroi (22) des pores pour former la première couche (20).

24. Procédé de contrôle de réactions ou de synthèses chimiques ou biochimiques, qui présente les étapes qui consistent à :
- préparer un dispositif selon les revendications 17 ou 18,
- introduire une substance de synthèse dans au moins l'un des pores du matériau de support, l'indice de réfraction nₚₒᵣₑ de la substance de synthèse étant inférieur à l'indice de réfraction n_{guide} de la première couche et
- injecter une lumière en mode de guide d'onde dans la première couche de la structure stratifiée pour exciter optiquement au moins la substance de synthèse présente à la surface de délimitation des pores dans un champ d'évanescence de mode de guide d'onde.
